# EUROPEAN PATENT SPECIFICATION

(11) **EP 1 851 497 B1**
(45) Date of publication and mention of the grant of the patent: **08.04.2015**
(21) Application number: 06724854.2
(22) Date of filing: 20.02.2006
(51) Int. Cl.: F27D 13/00, F27B 3/18, C21C 5/56

(54) **MELTING PLANT AND METHOD FOR THE PRODUCTION OF STEEL**
Schmelzanlage und Verfahren zur Stahlherstellung
INSTALLATION DE FUSION ET PROCEDE POUR LA PRODUCTION D'ACIER

(30) Priority: 22.02.2005 IT UD20050024
(43) Date of publication of application: 07.11.2007
(73) Proprietor: Danieli & C. Officine Meccaniche SpA, 33042 Buttrio (Udine) (IT)
(72) Inventor: MORSUT, Stefano, I-33100 Udine (IT); DIMITRIJEVIC, Vladimir, I-33100 Udine (IT); SELLAN, Romano, I-34124 Trieste (IT); TERLICHER, Stefano, I-33043 Cividale Del Friuli (IT)
(74) Representative: Petraz, Gilberto Luigi
(86) International application number: PCT/EP2006/060091
(87) International publication number: WO 2006/089870

(56) References cited:
- US-A- 5 647 288

## Description

### FIELD OF THE INVENTION

The present invention concerns a melting plant, and the relative method, for the production of steel by means of a melting furnace, for example of the electric arc type, fed through at least a lateral aperture with a metal charge, for example scrap iron, by means of a conveyor.

The conveyor is disposed, at least for a segment, in a preheating tunnel along which the fumes produced in the furnace by the melting process, which exit from said lateral aperture, are made to transit in counter-flow so as to heat the scrap before it is unloaded into the furnace.

The plant according to the present invention comprises diversion means able to be selectively activated to divert the fumes exiting from the furnace directly towards treatment and discharge means, bypassing the preheating tunnel.

### BACKGROUND OF THE INVENTION

Melting plants are known, for the production of steel, provided with a melting furnace, normally of the electric arc type, fed laterally with a metal charge, for example scrap iron, by means of a conveyor of the vibrating type which is associated, at least in its terminal part, with a preheating tunnel, as disclosed in USA-5,647,288.

It is also known to make the fumes produced in the melting furnace, which have a temperature of about 800°C and more, transit in counter-flow in the preheating tunnel in order to take the scrap to a temperature of about 200°C-300°C, before it is unloaded into the furnace, so as to improve the performance of the furnace itself.

At outlet from the preheating tunnel, the fumes produced must be subjected to a process of at least partial sedimentation and cooling before being discharged into the environment, and therefore they are conveyed towards suitable discharge and purification means.

The preheating of the scrap before it is unloaded into the furnace, by means of the passage of the fumes in the conveyor tunnel, is very advantageous in terms of energy saving and general improvement in the performance of the plant.

It is known a furnace connected to an air tight buffer tower by a waste gas duct. Upper and lower parts of the buffer tower are provided with waste gas outlet and inlet controlled by different valves. Water of metal scrap along with waste gas ejected from furnace, received by buffer tower and CO in waste gas is processed by burners present in the buffer tower.

It is also known a scrap conveyor for feeding a scrap to an arc furnace, while pre-heating the scrap by an exhaust gas from the processing furnace. The periphery of the scrap conveyor is covered with a gas seal cover, a flue is disposed above the scrap conveyed, an exhaust gas passage portion is disposed below the scrap conveyor and is controlled by a valve. An exhaust gas suction duct open to the exhaust gas passage portion through an exhaust gas suction space is disposed.

However, it entails problems if it is necessary to interrupt the functioning, even partly, of the preheating tunnel, or of the terminal part of the conveyor, for example due to malfunction or breakage or simply to effect the ordinary maintenance of some of their parts.

In these situations, in known solutions, the furnace has to be shut down since it is no longer possible to convey the fumes through the preheating tunnel.

This interruption to the functioning of the furnace entails a considerable decrease in the productivity of the whole melting plant, and the need for long downtimes in order to perform again the steps of switching on and bringing the furnace to its normal production routine.

One purpose of the present invention is to achieve a melting plant with a continuous charge that allows to keep the melting furnace always active, even when the functioning of the preheating tunnel and/or of the conveyor of the metal charge has to be temporarily stopped.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purpose, a melting plant for the production of steel according to the present invention comprises a melting furnace fed at least laterally with a metal charge, for example scrap iron, conveyed inside it by means of a conveyor disposed at least partly in a preheating tunnel.

The fumes that exit from the melting furnace through the lateral scrap-loading aperture are conveyed in the preheating tunnel and made to transit in counter-flow with respect to the metal charge which advances in the preheating tunnel, in order to heat it before it is unloaded into the furnace.

The preheating tunnel cooperates, on the side opposite the furnace, with treating and discharge means through which the fumes are introduced into the outside environment, after having been possibly cooled and filtered.

According to a characteristic feature of the present invention, the melting plant also comprises diversion means, interposed between the melting furnace and the discharge means, able to be selectively activated to convey the fumes directly towards the discharge means, bypassing the tunnel.

The selective activation of said diversion means makes possible, even in the event of a temporary interruption of the functioning of the tunnel or the terminal part of the conveyor, to continue to discharge the fumes produced in the melting furnace, in a secure and guided manner, without having to interrupt the functioning of the melting furnace itself.

To be more exact, the presence of the diversion means makes possible, at least for the period of non-use of the preheating tunnel and possibly of part of the conveyor, to convert the functioning of the furnace from a condition of substantially continuous lateral loading to a condition of loading from above, in the so-called "traditional" way, for example by means of loading buckets or mechanical arms of a known type.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a plane view of a melting plant for the production of steel according to the present invention;

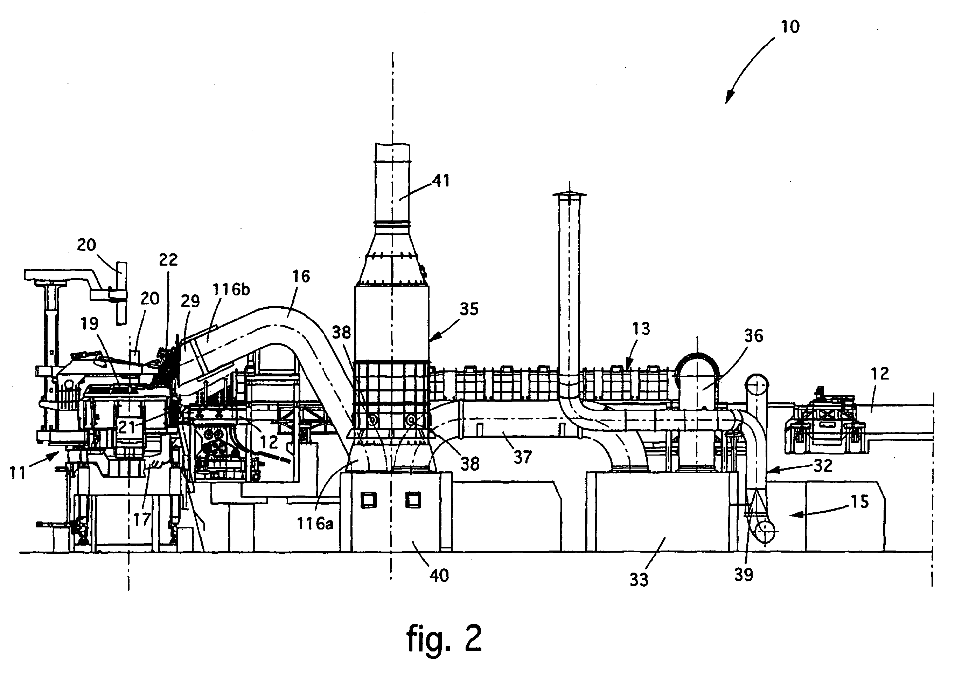

- fig. 2 is a partial lateral view of the melting plant in fig. 1;
- fig. 3 shows an enlarged detail of the melting plant in fig. 2 in a first operating condition;
- fig. 4 shows the enlarged detail of the melting plant in fig. 2 in a second operating condition.

### DETAILED DESCRIPTION OF A PREFERENTIAL FORM OF EMBODIMENT

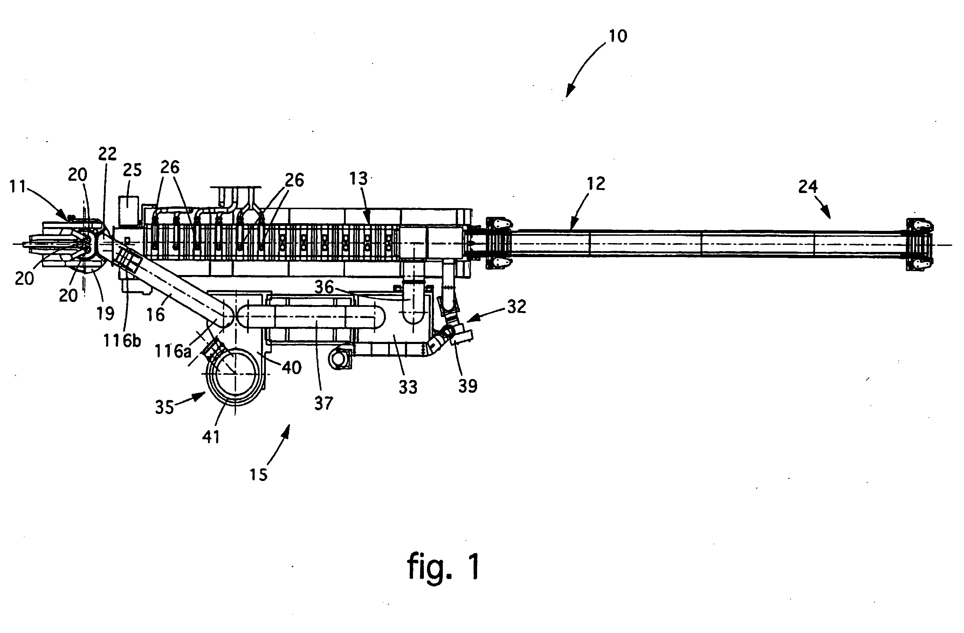

With reference to fig. 1, a melting plant 10 for the production of steel according to the present invention comprises a melting furnace 11, of the electric arc type, a conveyor 12 for loading scrap into the melting furnace 11, a preheating tunnel 13 in which at least a terminal part of the conveyor 12 is disposed, a treatment and discharge assembly 15 of the fumes produced in the melting furnace 11, connected to the terminal part of the preheating tunnel 13.

The melting plant 10 also comprises a diversion pipe or by-pass 16, to convey the fumes directly towards the treatment and discharge assembly 15, under determinate operating conditions, described in detail hereafter, excluding the passage of the fumes through the preheating tunnel 13.

The melting furnace 11 comprises a container or hearth 17, and a covering roof 19. Three electrodes 20, disposed at 120° with respect to each other, are introduced through suitable holes made in the covering roof 19, in order to strike the electric arc inside the hearth 17.

The hearth 17 comprises laterally an aperture 21 substantially aligned with the terminal part of the conveyor 12 and with the preheating tunnel 13, through which the scrap fed by the conveyor 12 is unloaded into the furnace 11.

Through the lateral aperture 21 the fumes produced in the furnace 11 during the melting cycle also exit, and are made to transit through the preheating tunnel 13 in counter-flow with respect to the direction of feed of the scrap. In this way, by exploiting the sensible heat of the fumes, which have temperatures varying from about 800°C to more than 1200°C, the scrap is preheated to an average temperature varying from about 200°C t about 300°C.

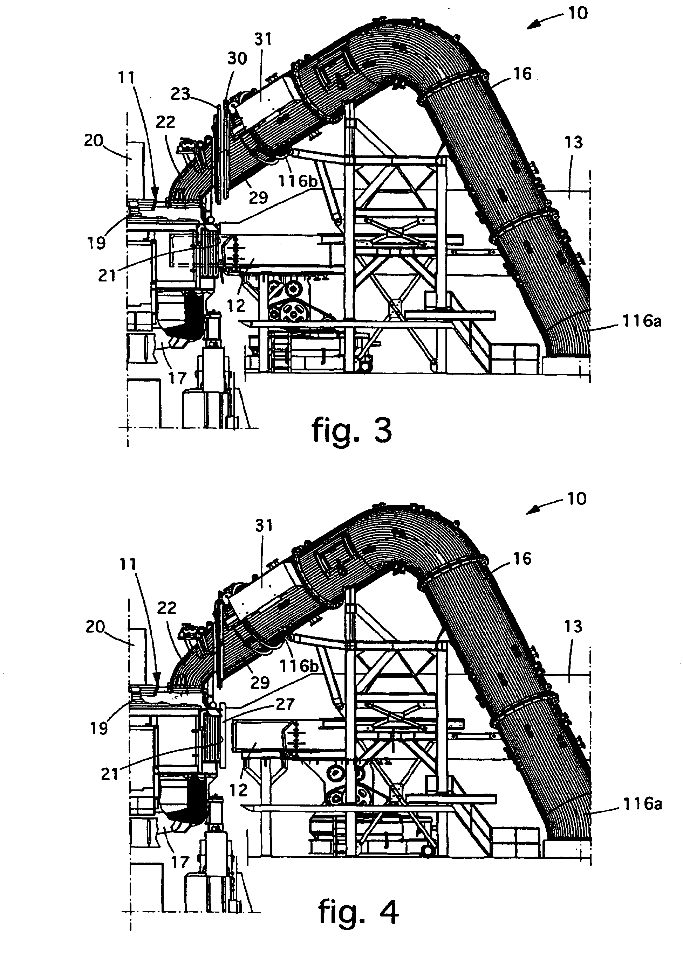

Apart from the holes through which the electrodes 20 are inserted, the covering roof 19 also comprises a fume discharge hood 22 able to be selectively connected to one end of the by-pass pipe 16. The fume discharge hood 22 is normally closed in sealed manner, by means of a closing flange 23, when the melting furnace 11 is functioning normally with the scrap being loaded through the lateral aperture 21 by means of the conveyor 12 (fig. 3). Advantageously, the closing flange 23 is associated with, or consists at least in part of, a cooled panel.

The conveyor 12 is preferably of the vibrating type, and transports the mass of scrap from a loading zone 24 thereof to the melting furnace 11 through the preheating tunnel 13.

The preheating tunnel 13, as said, is disposed in correspondence with the terminal part of the conveyor 12, and is associated with the aperture 21 of the hearth 17 to allow the fumes generated in the furnace 11 to transit through it, heating the scrap before it reaches the treatment and discharge assembly 15.

Advantageously, the preheating tunnel 13 is equipped with at least a burner 25, disposed in proximity with the lateral aperture 21, and downstream thereof a plurality of soufflage nozzles 26, disposed along at least part of its length.

The burner 25 is suitable to guarantee the correct energy to activate the carbon monoxide, while the pressurized air introduced by the soufflage nozzles 26 causes the post-combustion of the carbon monoxide and the other combustible gases contained in the fumes.

The treatment and discharge assembly 15 comprises, in this case and simply to give an example, a ventilation member 32, a sedimentation chamber 33 and a cooling tower 35.

Furthermore, the treatment and discharge assembly 15 comprises a first pipe 36 which connects the preheating tunnel 13 to the sedimentation chamber 33, and a second pipe 37, preferably cooled, which connects the sedimentation chamber 33 to the cooling tower 35.

The ventilation member 32 is of a substantially known type and comprises a ventilator 39 connected to the preheating tunnel 13, so as to create a depression which determines the passage of the fumes in counter-flow inside the latter and then through the first pipe 36 to the sedimentation chamber 33.

The cooling tower 35 comprises a base 40, in which the fumes are subjected to a second sedimentation and a chimney 41, by means of which the treated fumes are introduced into the environment.

Both the second pipe 37 and the by-pass pipe 16 are connected to the base 40, while, upstream of the chimney 41, the cooling tower 35 comprises a plurality of spray nozzles 38 which nebulize cold water onto the fumes in transit, in order to bring their temperature down rapidly and take them within the limits of temperature laid down for their introduction into the environment, and in any case below the temperature at which dioxins are formed.

According to a construction variant, the sedimentation chamber 33 may not be included and the fumes arriving from the preheating tunnel 13 are conveyed by the first pipe 36 directly inside the base 40.

The by-pass pipe 16 is substantially tubular in shape and extends at the upper part to the preheating tunnel 13.

The by-pass pipe 16 is configured to have a first lower end 116a connected to the base 40 of the cooling tower 35, and a second upper end 116b normally facing, although normally disconnected from, the fume discharge hood 22 of the melting furnace 11.

To be more exact, the upper end 116b of the by-pass pipe 16 has a telescopic terminal element 29, normally closed by means of a respective closing plate 30, and selectively movable by means of an actuator 31 between an inactive position (fig. 3), in which it is separated from the fume discharge hood 22, in order to keep the by-pass pipe 16 disconnected from the latter, and an operating position (fig. 4), in which it is in contact with the fume discharge hood 22, in order to define a structural continuity between the latter and the by-pass pipe 16.

In this case, the by-pas pipe 16 consists of or is covered by a plurality of cooling tubes and/or panels inside which a cooling liquid is made to flow, in order to cool the fumes passing through the by-pass pipe 16 when it is activated, before they are sent to the treatment and discharge assembly 15.

According to the invention, during the normal functioning conditions of the furnace 11, the charge is introduced laterally into the melting furnace 11 through the aperture 21, and the fumes produced are discharged through said aperture 21 and made to transit along the preheating tunnel 13.

When it is necessary, for any reason whatsoever, to interrupt the functioning of the conveyor 12, for example due to blockages of the charge, breakages of mechanical parts, ordinary or extraordinary maintenance, etc., the following steps are taken.

First of all, the closing plate 30 and the closing flange 23 are removed, and subsequently, by means of the actuator 31, the terminal element 29 is taken to its operating position, so as to contact the fume discharge hood 22 and define the structural continuity between the latter and the by-pass pipe 16. Advantageously, the connection between the terminal element 29 and the fume discharge hood 22 is made solid by means of screws or other similar or comparable clamping means, not shown here.

The lateral aperture 21 of the furnace 11 is closed by means of a panel 27 advantageously shaped according to the shape and size of the aperture 21 itself, and possibly of the type associated with, or consisting at least in part of, one or more cooled panels.

In this way, the fumes produced inside the hearth 17, not being able to exit from the aperture 21 due to the barrier effected by the panel 27, are channelled through the fume discharge hood 22 and from here through the by-pass pipe 16. Inside the by-pass pipe 16 they are subjected to a first cooling, until they reach the base 40 of the cooling tower 35, in which they are subjected to a process of sedimentation and are finally cooled inside the chimney 41.

The discharge of the fumes through the by-pass pipe 16 allows to interrupt temporarily the functioning of the preheating tunnel 13 and the conveyor 12, for example to effect the maintenance thereof, or carry out repairs that might become necessary, without needing to shut down the furnace 11 or reduce its productivity. If the by-pass pipe 16 is used, the furnace 11 is fed with the scrap by means of the traditional loading from above through loading buckets, of a known type and not shown here.

## Claims

1. Melting plant for the production of steel, comprising a melting furnace (11), a feeding conveyor (12) laterally connected to said melting furnace (11) for feeding a - metal charge inside said furnace (11), said conveyor (12) being disposed at least partly inside a tunnel (13) in which the fumes exiting from a discharge element (22) of said melting furnace (11) are made to transit in counter-flow with respect to said metal charge in order to heat it, and discharge means (15) able to discharge said fumes from said tunnel (13) towards the outside environment, **characterized in that** it also comprises diversion means (16), located between said melting furnace (11) and said discharge means (15), able to be selectively connected to said discharge element (22) to convey said fumes directly into said discharge means (15), excluding the passage of the fumes through said tunnel (13).

2. Melting plant as in claim 1, **characterized in that** said diversion means comprise at least a tubular pipe (16) having a first lower end (116a) connected to said discharge means (15), and a second upper end (116b) facing towards, although normally disconnected from, said fume discharge element (22) of said melting furnace (11).

3. Melting plant as in claim 2, **characterized in that** said upper end (116b) of said pipe (16) comprises a telescopic terminal element (29), selectively movable between an inactive position wherein it is separated from said fume discharge element (22), and an operating position wherein it is in contact with said fume discharge element (22) so as to define a structural continuity between said fume discharge element (22) and said pipe (16).

4. Melting plant as in claim 3, **characterized in that** said terminal element (29) is able to be selectively closed by means of a closing plate (30).

5. Melting plant as in claim 3 or 4, **characterized in that** said fume discharge element (22) is able to be selectively closed by means of a closing flange (23).

6. Melting plant as in claim 5, **characterized in that** said closing flange (23) is associated with, or at least partly consists of, a cooled panel.

7. Melting plant as in any claim from 2 to 6, **characterized in that** said pipe (16) consists of, or is covered by, a plurality of cooling tubes and/or panels inside which a cooling liquid is made to flow, in order to cool the fumes that pass in said pipe (16), when the latter is activated, before they are sent to said discharge means (15).

8. Melting plant as in any claim hereinbefore, **characterized in that** said melting furnace (11) comprises a container (17) and a covering roof (19), and that said container (17) laterally comprises an aperture (21) aligned with the terminal part of said conveyor (12) and with said tunnel (13).

9. Melting plant as in claims 2 and 8, **characterized in that** said fume discharge element (22) is associated with an upper wall of said covering roof (19).

10. Melting plant as in any claim hereinbefore, **characterized in that** said tunnel (13) is equipped with at least a burner (25) and with a plurality of soufflage nozzles (26), disposed along at least part of its length.

11. Melting plant as in any claim hereinbefore, **characterized in that** said discharge means (15) comprise at least a ventilation member (32) able to create a depression which determines the passage of the fumes in counter-flow inside said tunnel (13), and a cooling tower (35) having at least a base (40), with which said diversion means are associated and in which said fumes are subjected to at least a purification treatment, and a chimney (41) able to introduce into the environment the fumes treated in said base (40).

12. Melting plant as in claim 11, **characterized in that** said discharge means (15) also comprise a sedimentation chamber (33) interposed between said tunnel (13) and said base (40), able to effect a first purification treatment on said fumes.

13. Melting method for the production of steel by means of a melting furnace (11) able to be fed at least laterally with a metal charge, conveyed towards said melting furnace (11) by means of a conveyor (12) disposed at least partly inside a tunnel (13), said method comprising at least a first discharge step wherein the fumes exiting from said melting furnace (11) are made to transit in said tunnel (13) in counter-flow with respect to said metal charge in order to heat it, and are discharged from said tunnel (13) towards the outside environment by means of discharge means (15), **characterized in that** it comprises at least a second discharge step, as an alternative to the first, wherein said fumes exiting from a discharge hood (22) of said melting furnace (11) are made to transit in diversion means (16), interposed between said melting furnace (11) and said discharge means (15) and selectively connectable to said discharge hood (22), excluding the passage of the fumes through said tunnel (13).

## Patentansprüche

1. Schmelzanlage zur Herstellung von Stahl, mit einem Schmelzofen (11), einem seitlich mit dem Schmelzofen (11) verbundenen Aufgabeband (12) zum Zuführen einer Metallbeschickung in den Ofen (11), wobei sich das Band (12) zumindest teilweise in einem Tunnel (13) befindet, worin die Rauchgase, die aus einem Abgabeelement (22) des Schmelzofens (11) austreten, im Gegenstrom in Bezug auf die Metallbeschickung geführt werden, um diese zu erhitzen, und einer Abgabeeinrichtung (15), die in der Lage ist, die Rauchgase aus dem Tunnel (13) zur Außenumgebung abzugeben,
**dadurch gekennzeichnet, dass** weiterhin eine Umleiteinrichtung (16) umfasst ist, welche sich zwischen dem Schmelzofen (11) und der Abgabeeinrichtung (15) befindet, welche selektiv an das Abgabeelement (15) anschließbar ist, um die Rauchgase direkt in die Abgabeeinrichtung (15) zu befördern, wobei ein Durchgang der Rauchgase durch den Tunnel (13) ausgeschlossen ist.

2. Schmelzanlage nach Anspruch 1, **dadurch gekennzeichnet, dass** die Umleiteinrichtung mindestens eine Rohrleitung (16) mit einem ersten unteren Ende (116a), das an die Abgabeeinrichtung (15) angeschlossen ist, und einem zweiten oberen Ende (116b) umfasst, das, obwohl es normalerweise nicht daran angeschlossen ist, zu dem Rauchgasabgabeelement (22) des Schmelzofens (11) weist.

3. Schmelzanlage nach Anspruch 2, **dadurch gekennzeichnet, dass** das obere Ende (116b) des Rohrs (16) ein teleskopartiges Endelement (29) umfasst, welches selektiv zwischen einer inaktiven Position, in der es von dem Rauchgasabgabeelement (22) getrennt ist, und einer Betriebsposition, in welcher es mit dem Rauchgasabgabeelement (22) verbunden ist, sodass eine strukturelle Kontinuität zwischen dem Rauchgasabgabeelement (22) und dem Rohr (16) definiert ist, bewegbar ist.

4. Schmelzanlage nach Anspruch 3, **dadurch gekennzeichnet, dass** das Endelement (29) selektiv mittels einer Verschlussplatte (30) verschließbar ist.

5. Schmelzanlage nach Anspruch 3 oder 4, **dadurch gekennzeichnet, dass** das Rauchgasabgabeelement (22) selektiv mittels eines Verschlussflansches (23) verschließbar ist.

6. Schmelzanlage nach Anspruch 5, **dadurch gekennzeichnet, dass** der Verschlussflansch (23) mit einer gekühlten Platte verbunden ist oder mindestens teilweise daraus besteht.

7. Schmelzanlage nach einem der Ansprüche 2 bis 6, **dadurch gekennzeichnet, dass** das Rohr (16) aus einer Vielzahl von Kühlrohren und/oder -platten, worin eine Kühlflüssigkeit fließen gelassen wird, besteht oder damit bedeckt ist, um die Rauchgase, die in dem Rohr (16) verlaufen, zu kühlen, wenn letzteres aktiviert ist, bevor sie zu der Abgabeeinrichtung (15) überführt werden.

8. Schmelzanlage nach einem der vorhergehenden Ansprüche, **dadurch gekennzeichnet, dass** der Schmelzofen (11) einen Behälter (17) und ein Abdeckdach (19) aufweist und der Behälter (17) lateral eine Öffnung (21) aufweist, welche an dem Endabschnitt des Bands (12) und dem Tunnel (13) ausgerichtet ist.

9. Schmelzanlage nach Anspruch 2 und 8, **dadurch gekennzeichnet, dass** das Rauchgasabgabeelement (22) mit einer oberen Wand des Abdeckdachs (19) verbunden ist.

10. Schmelzanlage nach einem der vorhergehenden Ansprüche, **dadurch gekennzeichnet, dass** der Tunnel (13) mit mindestens einem Brenner (25) und mit einer Vielzahl von Blasdüsen (26) entlang seiner Länge ausgestattet ist.

11. Schmelzanlage nach einem der vorhergehenden Ansprüche, **dadurch gekennzeichnet, dass** die Abgabeeinrichtung (15) mindestens ein Be- bzw. Entlüftungselement (32) aufweist, mit welchem ein Unterdruck erzeugt werden kann, welcher den Durchgang der Rauchgase im Gegenstrom in dem Tunnel (13) bestimmt, und einen Kühlturm (35) mit mindestens einer Basis (40), mit welcher die Umleiteinrichtung verbunden ist, und worin die Rauchgase mindestens einer Reinigungsbehandlung unterzogen werden, und einen Abzug (41), der in der Lage ist, die in der Basis (40) behandelten Rauchgase in die Umgebung zu führen.

12. Schmelzanlage nach Anspruch 11, **dadurch gekennzeichnet, dass** die Abgabeeinrichtung (15) auch eine Sedimentationskammer (33) aufweist, welche sich zwischen dem Tunnel (13) und der Basis (40) befindet, womit eine erste Reinigungsbehandlung an den Rauchgasen bewirkt werden kann.

13. Schmelzverfahren zur Herstellung von Stahl mittels eines Schmelzofens (11), der zumindest seitlich mit einer Metallbeschickung beschickt werden kann, die mittels eines Förderbands (12), das sich zumindest teilweise in einem Tunnel (13) befindet, zu dem Schmelzofen (11) befördert werden kann, wobei das Verfahren mindestens einen ersten Abgabeschritt umfasst, in dem bewirkt wird, dass die aus dem Schmelzofen (11) austretenden Rauchgase in dem Tunnel (13) im Gegenstrom in Bezug auf die Metallbeschickung verlaufen, um diese zu erhitzen, und mittels einer Abgabeeinrichtung (15) aus dem Tunnel (13) an die Außenumgebung abgegeben werden, **dadurch gekennzeichnet, dass** es mindestens einen zweiten Abgabeschritt umfasst, als eine Alternative zu dem ersten, wobei die von einer Abzugshaube (22) des Schmelzofens (11) austretenden Rauchgase veranlasst werden, in eine Umleiteinrichtung (16) zu verlaufen, die sich zwischen dem Schmelzofen (11) und der Abgabeeinrichtung (15) befindet und selektiv and die Abzugshaube (22) anschließbar ist, wobei die Passage der Rauchgase durch den Tunnel (13) ausgeschlossen ist.

## Revendications

1. Installation de fusion pour la production d'acier, comprenant un four de fusion (11), un convoyeur alimenteur (12) raccordé latéralement audit four de fusion (11) afin d'alimenter l'intérieur dudit four (11) en une charge de métal, ledit convoyeur (12) étant disposé au moins partiellement à l'intérieur d'un tunnel (13) dans lequel les émanations sortant d'un élément de décharge (22) dudit four de fusion (11) sont amenées à transiter à contre-courant par rapport à ladite charge de métal afin de la chauffer, et des moyens de décharge (15) pouvant décharger lesdites émanations dudit tunnel (13) vers l'environnement extérieur, **caractérisée en ce qu'**elle comprend en outre des moyens de dérivation (16), situés entre ledit four de fusion (11) et lesdits moyens de décharge 15), pouvant être sélectivement raccordés audit élément de décharge (22) afin d'acheminer lesdites émanations directement dans lesdits moyens de décharge (15), à l'exclusion du passage des émanations à travers ledit tunnel (13).

2. Installation de fusion selon la revendication 1, **caractérisée en ce que** lesdits moyens de dérivation comprennent au moins une conduite tubulaire (16) ayant une première extrémité inférieure (116a) raccordée auxdits moyens de décharge (15), et une seconde extrémité supérieure (116b) en regard vers ledit, bien que normalement désaccouplée dudit, élément de décharge d'émanations (22) dudit four de fusion (11).

3. Installation de fusion selon la revendication 2, **caractérisée en ce que** ladite extrémité supérieure (116b) de ladite conduite (16) comprend un élément terminal télescopique (29), sélectivement mobile entre une position inactive dans laquelle il est séparé dudit élément de décharge d'émanations (22), et une position de fonctionnement dans laquelle il est en contact avec ledit élément de décharge d'émanations (22) de façon à définir une continuité structurelle entre ledit élément de décharge d'émanations (22) et ladite conduite (16).

4. Installation de fusion selon la revendication 3, **caractérisée en ce que** ledit élément terminal (29) peut être sélectivement fermé au moyen d'une plaque de fermeture (30).

5. Installation de fusion selon la revendication 3 ou 4, **caractérisée en ce que** ledit élément de décharge d'émanations (22) peut être sélectivement fermé au moyen d'une bride de fermeture (23).

6. Installation de fusion selon la revendication 5, **caractérisée en ce que** ladite bride de fermeture (23) est associée à, ou consiste au moins partiellement en, un panneau refroidi.

7. Installation de fusion selon l'une quelconque des revendications 2 à 6, **caractérisée en ce que** ladite conduite (16) consiste en, ou est couverte par, une pluralité de conduites et/ou de panneaux de refroidissement à l'intérieur desquels un liquide de refroidissement est amener à circuler, afin de refroidir les émanations qui passent dans ladite conduite (16), lorsque cette dernière est activée, avant qu'elles soient envoyées auxdits moyens de décharge (15).

8. Installation de fusion selon l'une quelconque des revendications précédentes, **caractérisée en ce que** ledit four de fusion (11) comprend un contenant (17) et un toit couvrant (19), et **en ce que** ledit contenant (17) comprend latéralement une ouverture (21) alignée avec la partie terminale dudit convoyeur (12) et avec ledit tunnel (13).

9. Installation de fusion selon les revendications 2 et 8, **caractérisée en ce que** ledit élément de décharge d'émanations (22) est associé à une paroi supérieure dudit toit couvrant (19).

10. Installation de fusion selon l'une quelconque des revendications précédentes, **caractérisée en ce que** ledit tunnel (13) est équipé d'au moins un brûleur (25) et d'une pluralité de buses de soufflage (26), disposées le long d'au moins une partie de sa longueur.

11. Installation de fusion selon l'une quelconque des revendications précédentes, **caractérisée en ce que** lesdits moyens de décharge (15) comprennent au moins un organe d'aérage (32) pouvant créer une dépression qui détermine le passage des émanations à contre-courant à l'intérieur dudit tunnel (13), et au moins une tour de refroidissement (35) comprenant au moins une base (40), à laquelle lesdits moyens de dérivation sont associés et dans laquelle lesdites émanations sont soumises à au moins un traitement de purification, et une cheminée (41) pouvant introduire dans l'environnement les émanations traitées dans ladite base (40).

12. Installation de fusion selon la revendication 11, **caractérisée en ce que** lesdits moyens de décharge (15) comprennent également une chambre de sédimentation (33) intercalée entre ledit tunnel (13) et ladite base (40), pouvant effectuer un premier traitement de purification sur lesdites émanations.

13. Procédé de fusion pour la production d'acier au moyen d'un four de fusion (11) pouvant être alimenté au moins latéralement en une charge de métal, acheminée vers ledit four de fusion (11) au moyen d'un convoyeur (12) disposé au moins partiellement à l'intérieur d'un tunnel (13), ledit procédé comprenant au moins une première étape de décharge dans laquelle les émanations sortant dudit four de fusion (11) sont amenées à transiter dans ledit tunnel (13) à contre-courant par rapport à ladite charge de métal afin de la chauffer, et sont déchargées dudit tunnel (13) vers l'environnement extérieur au moyen de moyens de décharge (15), **caractérisé en ce qu'**il comprend au moins une seconde étape de décharge, constituant une alternative à la première, dans lequel lesdites émanations sortant d'un capot de décharge (22) dudit four de fusion (11) sont amenées à transiter dans les moyens de dérivation (16), intercalés entre ledit four de fusion (11) et lesdits moyens de décharge (15) et pouvant être sélectivement raccordés audit capot de décharge (22), à l'exclusion du passage des émanations à travers ledit tunnel (13).
